(19) Europäisches Patentamt
European Patent Office
Office européen des brevets

(11) Publication number: **0 419 514 B1**

(12) # EUROPEAN PATENT SPECIFICATION

(45) Date of publication of patent specification: **03.11.93**

(51) Int. Cl.5: **G01V 5/10**

(21) Application number: **89906555.1**

(22) Date of filing: **03.05.89**

(86) International application number: **PCT/US89/01888**

(87) International publication number: **WO 89/11108 (16.11.89 89/27)**

(54) **METHOD OF ANALYZING EXPONENTIAL DATA.**

(30) Priority: **11.05.88 US 192444**

(43) Date of publication of application: **03.04.91 Bulletin 91/14**

(45) Publication of the grant of the patent: **03.11.93 Bulletin 93/44**

(84) Designated Contracting States: **DE FR GB NL**

(56) References cited:
**EP-A- 0 173 605**
**EP-A- 0 240 372**
**US-A- 4 097 737**

(73) Proprietor: **MOBIL OIL CORPORATION**
**150 East 42nd Street**
**New York New York 10017(US)**

(72) Inventor: **ALLEN, Linus Scott**
**15118 Leafy Lane**
**Dallas, TX 75248(US)**
Inventor: **DION, Eric Paul**
**1614 Reunion Circle**
**Carrollton, TX 75007(US)**
Inventor: **MILLS, William Raymond, Jr.**
**919 Clint Smith Drive**
**Duncanville, TX 75137(US)**

(74) Representative: **Curtis, Philip Anthony**
**Patent Department,**
**Mobil Court**
**3 Clements Inn**
**London WC2A 2EB (GB)**

EP 0 419 514 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method for determining characteristic decay parameters and amplitudes of exponentially varying data obtained by neutron die-away logging of a formation surrounding a borehole. The data may vary with time, distance, or any other independent variable. A specific application of such analysis is in the characterisation of subterranean formations with regard to fluid or mineral content, lithologic characteristics, porosity, or to provide stratigraphic correlation. A borehole logging tool is conventionally used to measure neutron or gamma radiation die-away in the formations surrounding a borehole. In neutron porosity logging, for example, a neutron source is utilized for bombarding the formations with fast neutrons as the logging tool is advanced through the borehole. In the course of moderation, the fast neutrons reach the epithermal range and thence are further moderated until they reach the thermal neutron range. The populations of neutrons at the various energy levels die-away, or decay, with time following primary radiation and thus offer means of characterising the formations. The rate of decay of the epithermal neutron population gives a quantitative indication of the amount of hydrogenous material present in the formations which in turn is indicative of the porosities of the formations. Examples of both methods and apparatus for carrying out epithermal die-away porosity logging are set forth in U.S. Patent No. 4,097,737 to W.R. Mills, Jr., and U.S. Patent Nos. 4,556,793 and 4,590,370 to L.S. Allen and W.R. Mills, Jr, and EP-A-0 240 372 (& US-A-4 721 853).

An article entitled "Improved Methods of Signal Processing For Pulsed Neutron Capture Logging", SPWLA Twenty- Second Annual Logging Symposium, June 23-26, 1981 by R. Randall and E.C. Hopkinson discusses a method of pulsed neutron capture logging to differentiate oil, gas and saline formation water environments through casing. The method applies statistical averaging to a single exponential die-away term in the logged data to determine neutron decay rate. In a still further reference, U.S. Patent No. 4,600,838 to D.K. Steinman and L.A. Jacobson, there is described a method of thermal neutron decay logging for overcoming excessive statistical fluctuations in the logged data, particularly in short neutron decay time formations. This method involves the determination of zero and first order moments of time during first and second discrete sequences of time gates respectively and the taking of the ratio of such moments to obtain a thermal neutron decay tine constant for the formations surrounding the logged borehole. In yet further references, U.S. Patent No. 4,625,110 to Smith, Jr. and U.S. Patent No. 4,638,161 to Smith, Jr. and Verbout, there is described a porosity determination utilizing a two-exponential model approach to epithermal neutron die-any.

While the foregoing described methods and systems for neutron die-away logging have been utilized in characterising subsurface formations, there is still a need for a method of improving on such characterisations when the logged data is the sum of a plurality of exponential terms, and more specifically, when there are at least three exponential terms representing differing die-away rates for borehole effects, formation effects and thermal neutron effects. The present invention provides for such a method of analysis as it relates to the exponentially varying data, and particularly, to radioactive borehole data have a plurality of differing exponential terms.

According to the present invention there is provided a method for determining characteristic decay parameters and amplitudes of exponentially varying data obtained by neutron die-away logging of a formation surrounding a borehole, as defined in claim 1. Further features of the invention are defined in the dependent claims.

Reference is now made to the accompanying drawings, in which :

Figure 1 illustrates a borehole logging system for making neutron or gamma-ray die-away measurements to be analyzed by the method of the present invention.

Figure 2 illustrates a specific example of epithermal neutron die-away measurements as might be made by the borehole logging system of Figure 1.

Figures 3A-3H are flow charts representing the steps carried out in accordance with the method of the present invention for analyzing the sum of the plurality of exponential terms illustrated in the die-away measurements of Figure 2.

In accordance with the present invention, weighted moments (or weighted averages) of a characteristic independent variable and amplitude are utilized over selected data intervals to determine values of the parameters that characterise such data when they are assumed to vary as the sum of exponential terms. The data may be either continuous or discrete.

This method is especially applicable to the analysis of data as might be obtained from the radioactivity borehole logging tool 10 of Figure 1 as it traverses along the borehole 11 through the surrounding formations 12. Sub data, representing epithermal neutron die-away, thermal neutron capture die-away, or gamma-ray die-away, typically are assumed to be represented by a plurality of exponential terms, such as

represented by the decay curve illustrated in Figure 2. For purposes of illustration, the curve in Figure 2 is assumed to consist of the sum of two epithermal neutron decay curves and one thermal neutron decay curve. A first exponential decay curve $a_1 e^{-\mu_1 t}$ from 0 to $t_1$ microseconds represents predominantly the rate of decay of epithermal neutrons attributable to borehole effects. A second exponential decay curve $a_2 e^{-\mu_2 t}$ from $t_1$ to $t_2$ microseconds represents predominantly the rate of decay of epithermal neutrons attributable to formation effects. A third decay curve $a_3 e^{-\mu_3 t}$ from $t_2$ to $t_f$ microseconds represents predominantly the rate of decay attributable to thermal neutron effects. Each of these curves becomes a straight line when plotted on a semilogarithmic scale. For a more detailed description of such a plurality of die-away characteristics, as well as a description of a borehole logging apparatus 10, including surface equipment, for making the die-away data measurements, reference may be had to the aforementioned U.S. Patent Nos. 4,097,737; 4,556,793; and 4,590,370.

The method of the present invention will now be described in accordance with two cases, firstly, when the exponentially varying data are measured as a continuous function of time and, secondly, when the data are measured in discrete time intervals. Either case is also applicable for exponentially increasing data.

Firstly, with respect to the continuous case, the data to be analyzed are represented by y(t) with $0 \leqq t \leqq t_f$, where y(t) is the measured intensity of the physical quantity being observed at time t. The data are to be modeled as follows:

$$f(t) = \sum_{k=1}^{m} a_k e^{-\mu_k t} , \qquad (1)$$

$$\text{where } 0 \leq t \leq t_f$$

The model consists of a sum of m exponential terms with m intensities $a_k$ and m time constants $\mu_k$ to be determined from the data.

The following are weighted moments of time and intensity of the data y(t):

$$\overline{t_\alpha^\beta}(t_a, t_b) = \frac{\int_{t_a}^{t_b} t^\beta \cdot t^\alpha \, y(t) \, dt}{\int_{t_a}^{t_b} t^\alpha \, y(t) \, dt} , \text{ and} \qquad (2)$$

$$\overline{y_\alpha}(t_a, t_b) = \frac{\int_{t_a}^{t_b} t^\alpha \, y(t) \, dt}{\int_{t_a}^{t_b} t^\alpha \, dt} . \qquad (3)$$

The quantity $\overline{t_\alpha^\beta}(t_a,t_b)$ is a relative moment of $t^\beta$, calculated over the range $t_a$ to $t_b$, with a weighting function $t^\alpha$. Similarly, $\overline{y}_\alpha(t_a,t_b)$ is a relative moment of y(t), calculated over the range $t_a$ to $t_b$, with a weighting function $t^\alpha$. The quantities $\overline{t_\alpha^\beta}(t_a,t_b)$ and $\overline{y}_\alpha(t_a,t_b)$ are derived from the data; the notation indicates that the calculated moment values depend on the interval $(t_a,t_b)$. The quantities $t_a$ and $t_b$ are within $0 \leqq t \leqq t_f$.

For m components, m different values of $\overline{t_\alpha^\beta}(t_a,t_b)$ and m different values of $\overline{y}_\alpha(t_a,t_b)$ are calculated. These different values are obtained by choosing distinctive sets of values for the quantities $\alpha$, $\beta$, $t_a$, and $t_b$. The choices are based on achieving a good contrast among the m terms in the model, and this in turn is based on the observed behavior of the data.

Now, with the same sets of values of $\alpha$, $\beta$, $t_a$ and $t_b$ that were used to calculate $\overline{t}_\alpha^\beta$ $(t_a,t_b)$ and $\overline{y}_\alpha(t_a,t_b)$, the following relative expected values of moments from the model are calculated:

$$E[t_\alpha^\beta(t_a,t_b)] = \frac{\int_{t_a}^{t_b} t^\beta \cdot t^\alpha \; f(t)\,dt}{\int_{t_a}^{t_b} t^\alpha \; f(t)\,dt} \quad , \quad \text{and} \qquad (4)$$

$$E[f_\alpha(t_a,\ t_b)] = \frac{\int_{t_a}^{t_b} t^\alpha \; f(t)\,dt}{\int_{t_a}^{t_b} t^\alpha \; dt} \quad . \qquad (5)$$

For m components there are m values of $E[t_\alpha^\beta$ $(t_a,t_b)]$ and m values of $E[f_\alpha(t_a,t_b)]$.

Next the corresponding model and data moments are equated:

$$E[t_\alpha^\beta(t_a,t_b)] = \overline{t_\alpha^\beta}(t_a,t_b) \text{ for m equations, } (6)$$

and

$E[f_\alpha(t_a,t_b)] = \overline{y}_\alpha(t_a,t_b)$ for m equations. (7)

These equations are solved simultaneously to get estimates of the parameters $a_k$ and $\mu_k$ for k = 1, m.

Secondly, with respect to the discrete case, the data to be analyzed are represented by an array of values $Y_n$ for n = 1, N . $Y_n$ is the measured intensity in time interval n. The data are modeled by

$$F_n = \sum_{k=1}^{m} A_k e^{-\lambda_k n} \quad , \qquad (8)$$

where

$$n = 1,N.$$

Similarly to the continuous case, the model consists of a sum of m exponential terms with m intensities $A_k$ and m time constants $\lambda_k$ to be estimated from the data.

The following are weighted moments of interval number and intensity of the data:

$$\overline{n_\alpha^\beta}(n_a, n_b) = \frac{\sum_{n_a}^{n_b} n^\beta \cdot n^\alpha Y_n}{\sum_{n_a}^{n_b} n^\alpha Y_n}, \text{ and} \tag{9}$$

$$\overline{Y_\alpha}(n_a, n_b) = \frac{\sum_{n_a}^{n_b} n^\alpha Y_n}{\sum_{n_a}^{n_b} n^\alpha} . \tag{10}$$

The quantity $\overline{n}_\alpha^\beta$ $(n_a,n_b)$ is a relative moment of $n^\beta$, calculated over the interval range $n_a$ to $n_b$, with a weighting function $n^\alpha$. Similarly, $\overline{Y}_\alpha(n_a,n_b)$ is a relative moment of $Y_n$, calculated over $n_a$ to $n_b$, with a weighting function $n^\alpha$.The quantities $\overline{n}_\alpha^\beta$ $(n_a,n_b)$ and $\overline{Y}_\alpha(n_a,n_b)$ are derived from the data; the notation indicates that the calculated moment values depend on the interval $(n_a,n_b)$. The quantities $n_a$ and $n_b$ are within $1 \leqq n \leqq N$.

For m components, m different values of $\overline{n}_\alpha^\beta$ $(n_a,n_b)$ and m different values of $\overline{Y}_\alpha(n_a,n_b)$ are calculated. These different values are obtained by choosing distinctive sets of values for the quantities $\alpha$, $\beta$, $n_a$ and $n_b$. The choices are based on achieving a good contrast among the m terms in the model, and this in turn is based on the observed behavior of the data.

With the same sets of values of $\alpha$, $\beta$, $n_a$ and $n_b$ that were used to calculate $n_\alpha^\beta$ $(n_a,n_b)$ and $Y_\alpha(n_a,n_b)$, the following relative expected values of moments are calculated from the model:

$$E[n_\alpha^\beta(n_a, n_b)] = \frac{\sum_{n_a}^{n_b} n^\beta \cdot n^\alpha F_n}{\sum_{n_a}^{n_b} n^\alpha F_n}, \text{ and} \tag{11}$$

$$E[F_\alpha(n_a, n_b)] = \frac{\sum_{n_a}^{n_b} n^\alpha F_n}{\sum_{n_a}^{n_b} n^\alpha} . \tag{12}$$

For m components, m values of $E[n_\alpha^\beta(n_a,n_b)]$ and m values of $E[F_\alpha(n_a,n_b)]$ are calculated.

Next, the corresponding model and data moments are equated:

$$E[n_\alpha^\beta(n_a,n_b)] = \overline{n_\alpha^\beta}(n_a,n_b) \text{ for m equations,} \quad (13) \text{ and}$$

$$E[F_\alpha(n_a,n_b)] = \overline{Y}_\alpha(n_a,n_b), \text{ for m equations.} \quad (14)$$

These equations are solved simultaneously to get estimates of the parameters $A_k$ and $\lambda_k$ for k = 1, m.

For the continuous and discrete cases, the following properties exist:

$A_k$ has units of counts per unit interval,

$\lambda_k$ has units of inverse unit interval,

$a_k$ has units of counts per unit time, and

$\mu_k$ has units of inverse unit time.

Special situations may arise in which values of one or more of the model parameters can be fixed because of some prior knowledge. This is most likely to be the case for the $\mu_k$ or the $\lambda_k$. Such prior knowledge is used in the model, with a corresponding reduction in the number of unknown parameters to be determined.

For convenience in using Equations (2)-(5) or (9)-(12), integer values could be selected for $\alpha$ and $\beta$.

The analysis described above includes the special case of a constant term in the model. In such case the associated time constant is zero. The analysis can also be applied to non-contiguous data, i.e. data that contain one or more gaps. This situation can be accommodated by utilizing the gapped nature of the data in the selection of the quantities $t_a$ and $t_b$, or $n_a$ and $n_b$.

For the case of discrete time intervals, the interval lengths may vary over the data set.

Finally, a specific example of the method of the present invention will now be described for the case wherein the data are available as a continuous function of time and are modeled by three exponential die-away components as shown in FIG 2 for a semilogarithmic plot of y(t) as a function of t. Times t=0 and $t=t_f$ are indicated, along with the corresponding data values y(0) and $y(t_f)$. The intensities and decay rates of the three components shown in FIG 2 are arbitrary. The data model is

$$f(t) = \sum_{k=1}^{3} a_k e^{-\mu_k t}, \quad (15)$$

where

$$0 \le t \le t_f.$$

For convenience $\alpha$ and $\beta$ are chosen to be unity. Next, sets of values of $t_a$ and $t_b$ are selected to be used in Equations (2)-(5). The logarithmic difference between y(0) and $y(t_f)$ is

$$\ln y(0) - \ln y(t_f) = \ln [y(0)/y(t_f)], \quad (16)$$

where ln is the natural logarithm. Dividing the above log difference into 3 equal intervals, each of length $\Delta$, yields the following:

$$\Delta = 1/3 \ln [y(0)/y(t_f)]. \quad (17)$$

This defines two values $y(t_1)$ and $y(t_2)$ such that:

$$\ln [y(0)/y(t_1)] = \Delta, \text{ and} \quad (18)$$

$$\ln [y(t_1)/y(t_2)] = \Delta. \quad (19)$$

These are equivalent to

$y(t_1) = y(0)\, e^{-\Delta}$, and (20)

$y(t_2) = y(t_1)\, e^{-\Delta} = y(0)\, e^{-2\Delta}$. (21)

For a given set of data, the values $y(t_1)$ and $y(t_2)$ determine times $t_1$ and $t_2$, as shown graphically in FIG 2. The times $t=0$, $t_1$, $t_2$, $t_f$ are used in calculating data moments and model moments. Thus, in Equations (2)-(5) with $\alpha=\beta=1$, the following 3 sets of values are used for $(t_a,t_b)$:
$(0,t_1)$, $(t_1,t_2)$, $(t_2,t_f)$.

The equations for the weighted moments of the data are as follows:

$$\overline{t_1^1}\,(0,\ t_1) = \frac{\int_0^{t_1} t^2\, y(t)\, dt}{\int_0^{t_1} t\ \ y(t)\, dt}\ , \qquad (22a)$$

$$\overline{t_1^1}\,(t_1, t_2) = \frac{\int_{t_1}^{t_2} t^2\ y(t)\ dt}{\int_{t_1}^{t_2} t\ y(t)\ dt}\ , \qquad (22b)$$

$$\overline{t_1^1}\,(t_2, t_f) = \frac{\int_{t_2}^{t_f} t^2\ y(t)\ dt}{\int_{t_2}^{t_f} t\ y(t)\ dt}\ , \qquad (22c)$$

$$\overline{y_1}\,(0, t_1) = \frac{\int_{0}^{t_1} t\ y(t)\ dt}{\int_{0}^{t_1} t\ dt}\ , \qquad (23a)$$

$$\overline{y_1}\,(t_1, t_2) = \frac{\int_{t_1}^{t_2} t\ y(t)\ dt}{\int_{t_1}^{t_2} t\ dt}\ , \text{ and} \qquad (23b)$$

$$\overline{y_1}\,(t_2, t_f) = \frac{\int_{t_2}^{t_f} t\ y(t)\ dt}{\int_{t_2}^{t_f} t\ dt}\ . \qquad (23c)$$

The expressions given in Equations (22a-c) and (23a-c) cannot be explicitly evaluated further, except for the trivial denominators in Equations (23a-c). Otherwise, these can be evaluated only numerically with a specific data function y(t) available.

With the model assumed in Equation (15), the equations for the expected values of the weighted moments of the model are as follows:

$$E[t_1^1(0,t_1)] = \frac{\int_0^{t_1} t^2 \left( \sum_{k=1}^{3} a_k e^{-\mu_k t} \right) dt}{\int_0^{t_1} t \left( \sum_{k=1}^{3} a_k e^{-\mu_k t} \right) dt}$$

$$= \frac{\sum_{k=1}^{3} a_k \left( \int_0^{t_1} t^2 e^{-\mu_k t} dt \right)}{\sum_{k=1}^{3} a_k \left( \int_0^{t_1} t e^{-\mu_k t} dt \right)}, \qquad (24a)$$

$$E[t_1^1(t_1, t_2)] = \frac{\sum_{k=1}^{3} a_k \left( \int_{t_1}^{t_2} t^2 e^{-\mu_k t} dt \right)}{\sum_{k=1}^{3} a_k \left( \int_{t_1}^{t_2} t e^{-\mu_k t} dt \right)}, \qquad (24b)$$

$$E[t_1^1(t_2, t_f)] = \frac{\sum_{k=1}^{3} a_k \left( \int_{t_2}^{t_f} t^2 e^{-\mu_k t} dt \right)}{\sum_{k=1}^{3} a_k \left( \int_{t_2}^{t_f} t\ e^{-\mu_k t} dt \right)}, \quad (24c)$$

$$E[f_1(0,t_1)] = \frac{\sum_{k=1}^{3} a_k \left( \int_{0}^{t_1} t\ e^{-\mu_k t} dt \right)}{\int_{0}^{t_1} t\ dt}, \quad (25a)$$

$$E[f_1(t_1, t_2)] = \frac{\sum_{k=1}^{3} a_k \left( \int_{t_1}^{t_2} t\ e^{-\mu_k t} dt \right)}{\int_{t_1}^{t_2} t\ dt}, \text{ and } (25b)$$

$$E[f_1(t_2, t_f)] = \frac{\sum_{k=1}^{3} a_k \left( \int_{t_2}^{t_f} t\ e^{-\mu_k t} dt \right)}{\int_{t_2}^{t_f} t\ dt}. \quad (25c)$$

Although tedious algebraically, all indicated operations in Equations (24a-c) and (25a-c) can be carried out explicitly. Note that each equation involves all six model parameters $a_1$, $\mu_1$, $a_2$, $\mu_2$, $a_3$, $\mu_3$.

Equating corresponding model moments and data moments, we obtain:

$$E[t_1^1(0,t_1)] = \overline{t_1^1}(0,t_1) \quad , \quad (26a)$$

$$E[t_1^1(t_1,t_2)] = \overline{t_1^1}(t_1,t_2) \quad , \quad (26b)$$

$$E[t_1^1(t_2,t_f)] = \overline{t_1^1}(t_2,t_f) \quad , \quad (26c)$$

$$E[f_1(0,t_1)] = \bar{y}_1(0,t_1)\ , \qquad (26d)$$

$$E[f_1(t_1,t_2)] = \bar{y}_1(t_1,t_2)\ , \text{ and} \qquad (26e)$$

$$E[f_1(t_2,t_f)] = \bar{y}_1(t_2,t_f)\ . \qquad (26f)$$

The above six transcendental equations are solved simultaneously to yield values of the six model parameters.

Referring now to FIGS 3A-H, there are shown detailed flow charts of an algorithm used to analyze epithermal neutron die-away data for formation porosity and having three differing decay rates attributable to borehole, formation and thermal effects. The algorithm of this flow chart may be programmed in FORTRAN or any other suitable programming language for use on any modern digital computer.

While the foregoing preferred embodiment of the method of the present invention has been described and illustrated, numerous modifications or alterations may be made without departing from the scope of the invention, as set forth in the appended claims.

## Claims

**1.** A method for determining characteristic decay parameters and amplitudes of exponentially varying data obtained by neutron die-away logging of a formation surrounding a borehole, comprising :

a) traversing the borehole with a borehole logging tool having a neutron source for bombarding the formation with fast neutrons as the logging tool is advanced through the borehole, said tool being capable of measuring the neutron die-away in said formation to provide said exponentially varying data;

b) detaining weighted movements of a characteristic independent variable and amplitude from said data;

c) determining corresponding modelled weighted moments of the characteristic independent variable and amplitude for a model consisting of a first exponential term representing a borehole effect on said die-away of neutron radiation, a second exponential term representing a formation effect on said die-away of neutron radiation, and a third exponential term representing a time-dependent background effect on said die-away rate;

d) equating said weighted data moments of the characteristic independent variable and said modelled moments of the characteristic independent variable;

e) equating said weighted data moments of amplitude and said modelled moments of amplitude; and

f) simultaneously solving the equations resulting from steps d) and e) for values of the characteristic decay parameters and amplitudes appearing in said model.

**2.** The method of claim 1 wherein said characteristic independent variable is time.

**3.** The method of claim 1 wherein said exponentially varying terms identify the decay of epithermal neutrons resulting from the pulsed neutron logging of said formations.

**4.** The method of claim 1 wherein said exponentially varying terms identify the decay of thermal neutrons resulting from the pulsed neutron logging of said formation.

**5.** The method of claim 1 wherein said exponentially varying terms identify the decay of thermal neutron capture gamma rays resulting from the pulsed neutron logging of said formation.

**6.** The method of claim 2 wherein said data are continuous, said characteristic decay parameters having units of inverse unit time, and said amplitudes having units of counts per unit time.

**7.** The method of claim 2 wherein the said data are in discrete intervals, said characteristic decay parameters having units of inverse unit interval, and said amplitudes having units of counts per unit interval.

**8.** The method of claims 1 wherein said characteristic independent variable is distance.

**9.** The method of claim 1, wherein

(g) step (b) comprises:

i) determining a weighted moment of time $\overline{t}_{\alpha}^{\beta}$ $(t_a,t_b)$ from said data in accordance with the following:

$$\overline{t_{\alpha}^{\beta}}(t_a, t_b) = \frac{\int_{t_a}^{t_b} t^{\beta} \cdot t^{\alpha} \cdot y(t) . dt}{\int_{t_a}^{t_b} t^{\alpha} \cdot y(t) . dt}$$

where

y(t) = exponentially varying data,
t = weighted function,
t = time moment,
$t_a$ = initial time, and
$t_b$ = final time; and

(ii) determining a weighted moment of aptitude $\overline{y}_{\alpha}(t_a,t_b)$ from said data in accordance with the following:

$$\overline{y_{\alpha}}(t_a, t_b) = \frac{\int_{t_a}^{t_b} t^{\alpha} . y(t) . dt}{\int_{t_a}^{t_b} t^{\alpha} . dt}$$

(h) step (c) comprises :

(i) defining a weighted moment of time $E[t_{\alpha}^{\beta} (t_a, t_b)]$ for a model consisting of a sum of exponential terms in accordance with the following expression:

$$E[t_{\alpha}^{\beta}(t_a, t_b)] = \frac{\int_{t_a}^{t_b} t^{\beta} \cdot t^{\alpha} . f(t) . dt}{\int_{t_a}^{t_b} t^{\alpha} \cdot f(t) . dt}$$

where f(t) is a model represented by the summation of exponential terms as follows:

$$f(t) = \sum_{k=1}^{m} a_k e^{-\mu k^t} \; ; \text{ for } 0 < t < t_f$$

where

$a_k$ = intensity,
$\mu_k$ = time constant, and
k = number of exponential terms for 1 to m; and

(ii) determining a weighted moment of intensity $E[f_\alpha(t_a, t_b)]$ for a model consisting of a sum of exponential terms in accordance with the following expression:

$$E[f_\alpha(t_a, t_b)] = \frac{\int_{t_a}^{t_b} t^\alpha \cdot f(t) \cdot dt}{\int_{t_a}^{t_b} t^\alpha \cdot dt}$$

(i) step (d) comprises equating the weighted moments of time $\bar{t}_\alpha^\beta$ $(t_a, t_b)$ from step (a) with the corresponding modelled moments of time $E[t_\alpha^\beta$ $(t_a, t_b)]$ from step (d):

$$E[t_\alpha^\beta(t_a, t_b)] = \overline{t_\alpha^\beta}(t_a, t_b) \text{ for m equations,}$$

(j) step (e) comprises equating the weighted moments of amplitude $\bar{y}_\alpha(t_a, t_b)$ from step (b) with the corresponding weighted data moments of amplitude $E[f_\alpha(t_a, t_b)]$ from step (e):

$E[f_\alpha(t_a, t_b)] = \bar{y}_\alpha(t_a, t_b)$ for m equations, and

(k) step (f) comprises simultaneously solving the equations resulting from steps (h) and (j) for values of the time and amplitude parameters appearing in said model.

**Patentansprüche**

1. Verfahren zum Bestimmen von charakteristischen Abklingparametern und Amplituden von exponentiell variierenden Daten, die durch eine Neutronenabklingmessung einer ein Bohrloch umgebenden Formation erhalten wurden, mit den Schritten:
   a) Hindurchführen eines Werkzeugs zur Bohrlochmessung durch ein Bohrloch, wobei das Werkzeug eine Neutronenquelle zum Beschießen der Formation mit schnellen Neutronen aufweist, wenn das Werkzeug zur Bohrlochmessung durch das Bohrloch vorwärtsbewegt wird, und wobei das Werkzeug in der Lage ist, das Abklingen der Neutronen in der genannten Formation zu messen, um die genannten exponentiell variierenden Daten bereitzustellen;
   b) Bestimmen von gewogenen Momenten einer charakteristischen unabhängigen Variablen und einer Amplitude aus den genannten Daten;
   c) Bestimmen entsprechender, in ein Modell überführter gewogener Momente der charakteristischen unabhängigen Variablen und der Amplitude für ein Modell, bestehend aus einer ersten exponentiellen Größe, die einem Bohrlocheffekt auf das Abklingen der Neutronenstrahlung entspricht, einer zweiten exponentiellen Größe, die einem Formationseffekt auf das Abklingen der Neutronenstrahlung entspricht, und einer dritten exponentiellen Größe, die einem zeitabhängigen Hintergrundeffekt auf die Abklinggeschwindigkeit entspricht;
   d) Gleichsetzen der gewogenen Datenmomente der charakteristischen unabhängigen Variablen und der in ein Modell überführten Momente der charakteristischen unabhängigen Variablen;
   e) Gleichsetzen der gewogenen Datenmomente der Amplitude und der in ein Modell überführten Amplitudenmomente; und
   f) gleichzeitiges Lösen der aus den Stufen d) und e) sich ergebenden Gleichungen für Werte der charakteristischen Abklingparameter und Amplituden, die in dem genannten Modell auftreten.

2. Verfahren nach Anspruch 1, worin die charakteristische unabhängige Variable die Zeit ist.

3. Verfahren nach Anspruch 1, worin die exponentiell variierenden Größen das Abklingen der epithermen Neutronen identifizieren, die sich aus der Bohrlochmessung der genannten Formationen mittels pulsierender Neutronen ergeben.

4. Verfahren nach Anspruch 1, worin die exponentiell variierenden Größen das Abklingen der thermischen Neutronen identifizieren, die sich aus der Bohrlochmessung der genannten Formation mittels pulsierender Neutronen ergeben.

5. Verfahren nach Anspruch 1, worin die exponentiell variierenden Größen das Abklingen der Gammastrahlen beim Einfang thermischer Neutronen identifizieren, wobei sich die Gammastrahlen aus der Bohrlochmessung der genannten Formation mittels pulsierender Neutronen ergeben.

6. Verfahren nach Anspruch 2, worin die genannten Daten kontinuierlich sind, die charakteristischen Abklingparameter Einheiten der reziproken Zeiteinheit haben und die Amplituden Einheiten der Zählungen pro Zeiteinheit aufweisen.

7. Verfahren nach Anspruch 2, worin die genannten Daten in einzelnen Intervallen vorliegen, die charakteristischen Abklingparameter Einheiten aus der reziproken Einheit des Intervalls haben und die Amplituden Einheiten der Zählungen pro Einheit des Intervalls aufweisen.

8. Verfahren nach Anspruch 1, worin die charakteristische unabhängige Variable die Entfernung ist.

9. Verfahren nach Anspruch 1, worin

g) die Stufe b) folgendes umfaßt:

(i) Bestimmen eines gewogenen Moments der Zeit $\bar{t}_\alpha^\beta$ $(t_a,t_b)$ aus den genannten Daten in Übereinstimmung mit der folgenden Beziehung

$$\overline{t_\alpha^\beta}(t_a, t_b) = \frac{\int_{t_a}^{t_b} t^\beta \cdot t^\alpha \cdot y(t) \cdot dt}{\int_{t_a}^{t_b} t^\alpha \cdot y(t) \cdot dt},$$

worin

$y(t)$ = exponentiell variierende Daten

$t^\alpha$ = Bewertungsfunktion

$t^\beta$ = Zeitmoment

$t_a$ = Anfangszeit

$t_b$ = Endzeit

bedeuten, und

(ii)Bestimmen eines gewogenen Moments der Amplitude $\bar{y}_\alpha(t_a,t_b)$ aus den genannten Daten in Übereinstimmung mit der folgenden Beziehung

$$\overline{y_\alpha}(t_a, t_b) = \frac{\int_{t_a}^{t_b} t^\alpha \cdot y(t) \cdot dt}{\int_{t_a}^{t_b} t^\alpha \cdot dt};$$

h) die Stufe c) folgendes umfaßt:

(i) Das Bestimmen eines gewogenen Moments der Zeit $E[t_\alpha^\beta\ (t_a,t_b)]$ für ein Modell, das aus einer Summe von exponentiellen Größen in Übereinstimmung mit dem folgenden Ausdruck

$$E[t_\alpha^\beta(t_a, t_b)] = \frac{\int_{t_a}^{t_b} t^\beta \cdot t^\alpha . f(t) . dt}{\int_{t_a}^{t_b} t^\alpha . f(t) . dt}$$

steht, worin f(t) ein Modell ist, das durch die Summierung von exponentiellen Größen wie folgt dargestellt wird

$$f(t) = \sum_{k=1}^{m} a_k e^{-\mu k^t} \quad ; \text{ für } 0 < t < t_f ,$$

worin

$a_k$ = Intensität

$\mu_k$ = Zeitkonstante und

k = Anzahl der exponentiellen Größen für 1 bis m

bedeuten und

(ii)Bestimmen eines gewogenen Moments der Intensität $E[f_\alpha(t_a,t_b)]$ für ein Modell, das aus einer Summe von exponentiellen Größen in Übereinstimmung mit dem folgenden Ausdruck steht

$$E[f_\alpha(t_a, t_b)] = \frac{\int_{t_a}^{t_b} t^\alpha . f(t) . dt}{\int_{t_a}^{t_b} t^\alpha . dt} \quad ;$$

i) die Stufe d) ein Gleichsetzen der gewogenen Momente der Zeit $t_\alpha(t_a,t_b)$ aus der Stufe a) mit den entsprechenden, in ein Modell überführten Momenten der Zeit $E[t_\alpha(t_a,t_b)]$ aus der Stufe d) beinhaltet:

$$E[t_\alpha^\beta(t_a,t_b)] = \overline{t_\alpha^\beta}(t_a,t_b) \text{ für m Gleichungen,}$$

j) die Stufe e) ein Gleichsetzen der gewogenen Momente der Amplitude $\overline{y}_\alpha(t_a,t_b)$ aus der Stufe b) mit den entsprechenden gewogenen Datenmomenten der Amplitude $E[f_\alpha(t_a,t_b)]$ aus der Stufe e) beinhaltet:

$E[f_\alpha(t_a,t_b)] = \overline{y}_\alpha(t_a,t_b)$ für m Gleichungen und

k) die Stufe f) gleichzeitig das Lösen der Gleichungen, die sich aus den Stufen h) und j) ergeben, für Werte der Zeit und für Amplitudenparameter, die in dem genannten Modell auftreten, beinhaltet.

## Revendications

**1.** Un procédé de détermination de l'amplitude et des paramètres de décroissance qui caractérisent des données à variation exponentielle obtenues comme résultats de la diagraphie de l'évolution des neutrons d'une formation entourant un trou de sondage, comprenant:

a) la traversée du trou de sondage par un dispositif de diagraphie comportant une source de neutrons pour bombarder la formation avec des neutrons rapides au fur et à mesure que le dispositif de diagraphie progresse dans le trou de sondage, ledit dispositif étant capable de mesurer la décroissance neutronique dans ladite formation pour fournir lesdites données à variation exponentielle;

b) la détermination des moments pondérés de l'amplitude et d'une variable indépendante caractéristique desdites données:

c) la détermination des moments pondérés mis sous forme de modéle mathématique de l'amplitude et de la variable indépendante caractéristique correspondant à un modèle comportant un premier terme exponentiel représentant l'effet du trou de sondage sur ladite décroissance de la radiation des neutrons, un second terme exponentiel représentant l'effet de la formation sur ladite évolution de la radiation des neutrons et un troisième terme exponentiel représentant un effet de fond, dépendant du temps, sur ledit taux d'évolution,

d) l'expression de l'égalité entre lesdits moments pondérés de données de la variable caractéristique indépendante et lesdits moments selon le modéle de la variable caractéristique indépendante;

e) l'expression de l'égalité entre lesdits moments pondérés de données de l'amplitude et lesdits moments selon le modéle de l'amplitude; et

f) la résolution simultanée des équations résultant des étapes d) et e) pour les valeurs des paramètres de décroissance caractéristiques et des amplitudes apparaissant dans ledit modèle.

**2.** Un procédé selon la revendication 1, caractérisé en ce que ladite variable indépendante caractéristique est le temps.

**3.** Un procédé selon la revendication 1, caractérisé en ce que lesdits termes à variation exponentielle identifient la décroissance des neutrons épithermiques résultant de la diagraphie par neutrons pulsés desdites formations.

**4.** Un procédé selon la revendication 1, caractérisé en ce que lesdits termes à variation exponentielle identifient la décroissance des neutrons thermiques résultant de la diagraphie par neutrons pulsés de ladite formation.

**5.** Un procédé selon la revendication 1, caractérisé en ce que lesdits termes à variation exponentielle identifient la décroissance des rayons gamma due à la capture des neutrons thermiques résultant d'une diagraphie par neutrons pulsés de ladite formation.

**6.** Un procédé selon la revendication 2, caractérisé en ce que lesdites données sont continues, lesdits paramètres de décroissance caractéristiques ayant comme unités l'inverse de l'unité de temps et lesdites amplitudes ayant comme unités des nombres de coups par unité de temps.

**7.** Un procédé selon la revendication 2, caractérisé en ce que lesdites données sont comprises dans des intervalles discrets, lesdits paramètres de décroissance caractéristiques ont comme unités l'inverse de l'unité de temps et lesdites amplitudes ont comme unités des nombres de coups par intervalle unitaire.

**8.** Un procédé selon la revendication 1, caractérisé en ce que ladite variable indépendante caractéristique est la distance.

**9.** Un procédé selon la revendication 1, caractérisé en ce que:

g) l'étape (b) comprend:

i) la détermination d'un moment pondéré de temps $\bar{t}_\alpha^\beta$ $(t_a, t_b)$ à partir desdites données selon la formule suivante:

$$\overline{t_{\alpha}^{\beta}}(t_a, t_b) = \frac{\int_{t_a}^{t_b} t^{\beta} \cdot t^{\alpha} \cdot y(t).dt}{\int_{t_a}^{t_b} t^{\alpha} \cdot y(t).dt}$$

dans laquelle:

$y(t)$ = données à variation exponentielle,

$\overline{t_{\alpha}^{\beta}}$ = fonction pondérée

$t$ = moment de temps

$t_a$ = temps initial et

$t_b$ = temps final, et

ii) détermination du moment pondéré de l'amplitude $\overline{y_{\alpha}}(t_a, t_b)$ à partir desdites données selon l'équation suivante:

$$\overline{y_{\alpha}}(t_a, t_b) = \frac{\int_{t_a}^{t_b} t^{\alpha} \cdot y(t) \cdot dt}{\int_{t_a}^{t_b} t^{\alpha} \cdot dt}$$

(h) l'étape (c) comprend:

i) la détermination d'un moment pondéré du temps $E[t_{\alpha}^{\beta}(t_a, t_b)]$ sur base d'un modèle consistant en la somme de termes exponentiels selon l'expression suivante:

$$E[t_{\alpha}^{\beta}(t_a, t_b)] = \frac{\int_{t_a}^{t_b} t^{\beta} \cdot t^{\alpha} \cdot f(t) \cdot dt}{\int_{t_a}^{t_b} t^{\alpha} \cdot f(t).dt}$$

dans laquelle:

$f(t)$ est un modèle représenté par la somme des termes exponentiels faite selon:

$$f(t) = \sum_{k=1}^{m} a_k e^{-\mu_k t}$$

$$\text{pour } 0 < t < t_f$$

avec :

$a_k$ = intensité,

$\mu_k$ = constante de temps, et

k = nombre de termes exponentiels de 1 à m; et

ii) la détermination du moment pondéré de l'intensité $E[f_\alpha(t_a, t_b)]$ sur base d'un modèle consistant en la somme de termes exponentiels selon l'expression suivante:

$$E[f_\alpha(t_a, t_b)] = \frac{\int_{t_a}^{t_b} t^\alpha . f(t) . dt}{\int_{t_a}^{t_b} t^\alpha . dt}$$

(i) l'étape (d) comprend l'expression de l'égalité entre les moments de temps pondérés $\bar{t}_\alpha^\beta$ $(t_a,t_b)$ obtenus à l'étape (a) et les moments de temps correspondants basé sur le modéle $E[t_\alpha^\beta$ $(t_a, t_b)]$ obtenus à l'étape (d):

$$E[t_\alpha^\beta(t_a, t_b)] = \overline{t^\beta}_\alpha(t_a, t_b)$$

par m équations;

(j) l'étape (e) comprend l'expression de l'égalité entre les moments de l'amplitude pondérés $\bar{Y}_\alpha(t_a,t_b)$ de l'étape (b) et les moments pondérés des données d'amplitude correspondantes $E[f_\alpha(t_a, t_b)]$ obtenus à l'étape (e):

$E[f_\alpha(t_a, t_b)] = \bar{Y}_\alpha(t_a, t_b)$

par m équations; et

(k) l'étape (f) comprend la résolution simultanée des équations résultant des étapes (h) et (j) pour les valeurs des paramètres de temps et d'amplitude qui apparaissent dans ledit modèle.

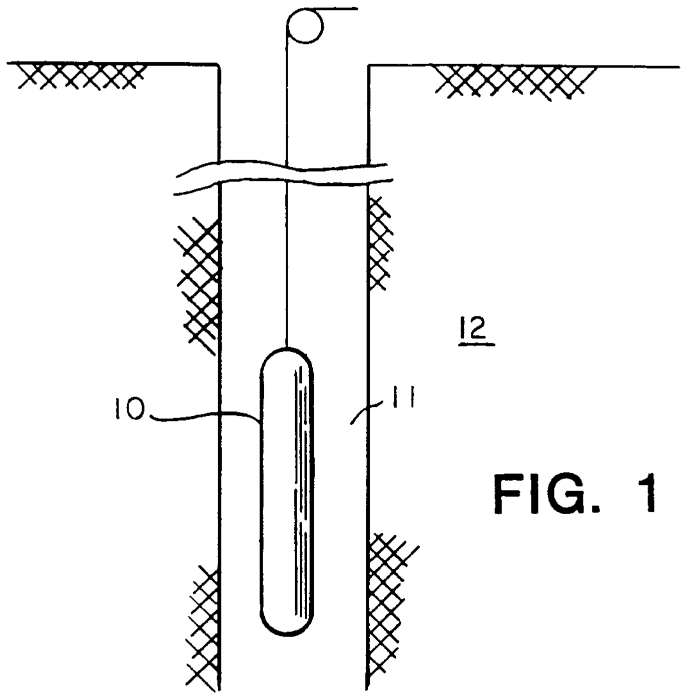
12
10
11

FIG. 1

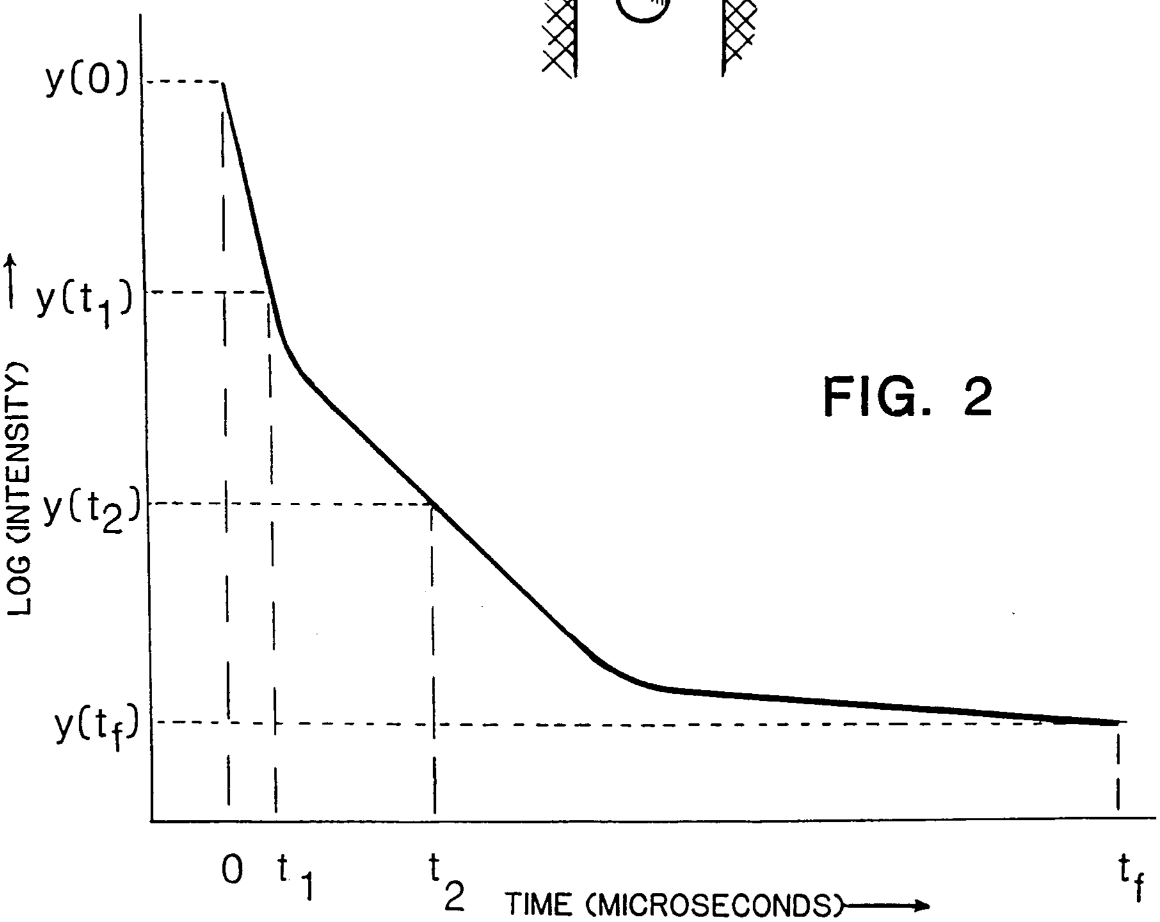
y(0)
$y(t_1)$
$y(t_2)$
$y(t_f)$
LOG (INTENSITY)
0
$t_1$
$t_2$
$t_f$
TIME (MICROSECONDS)

FIG. 2

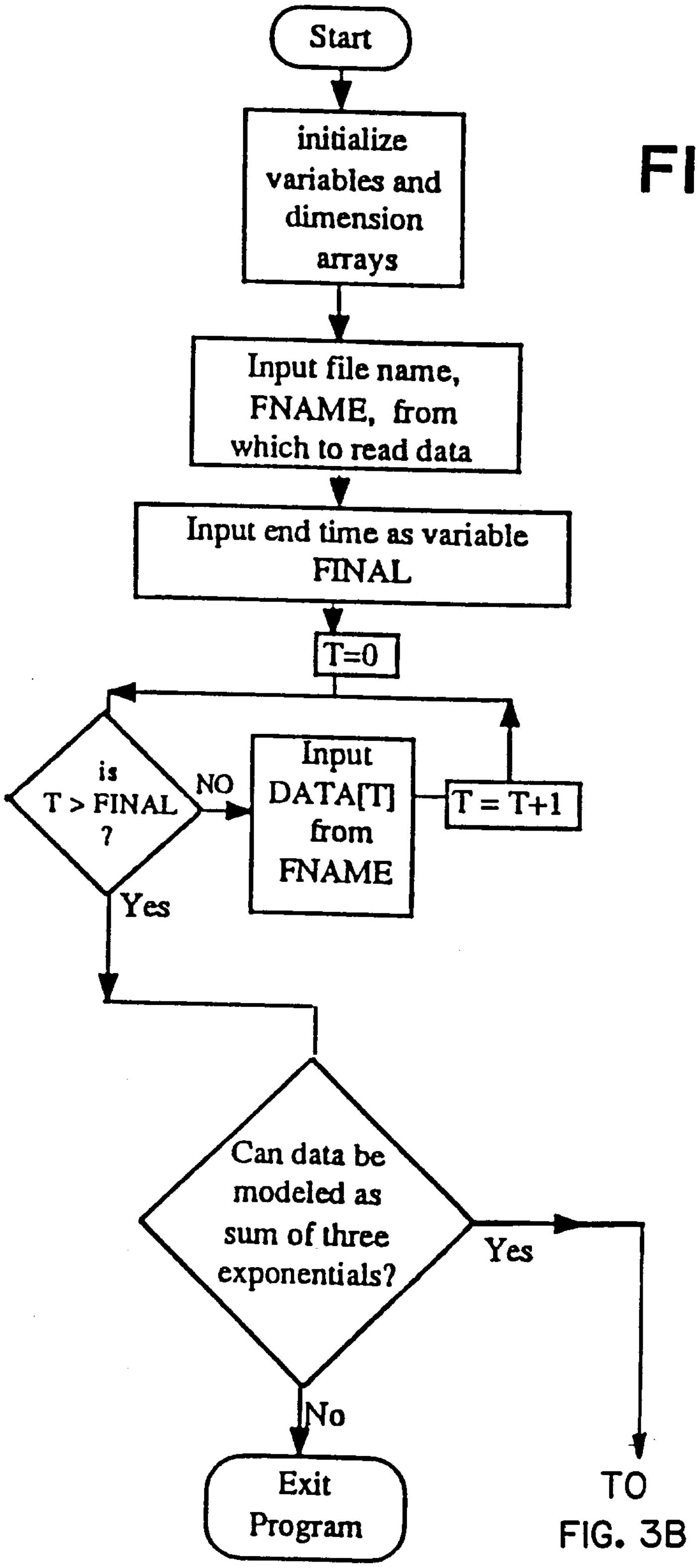
Start
initialize variables and dimension arrays
Input file name, FNAME, from which to read data
Input end time as variable FINAL
T=0
is T > FINAL ?
NO
Input DATA[T] from FNAME
T = T+1
Yes
Can data be modeled as sum of three exponentials?
Yes
No
Exit Program
TO FIG. 3B

FIG. 3A

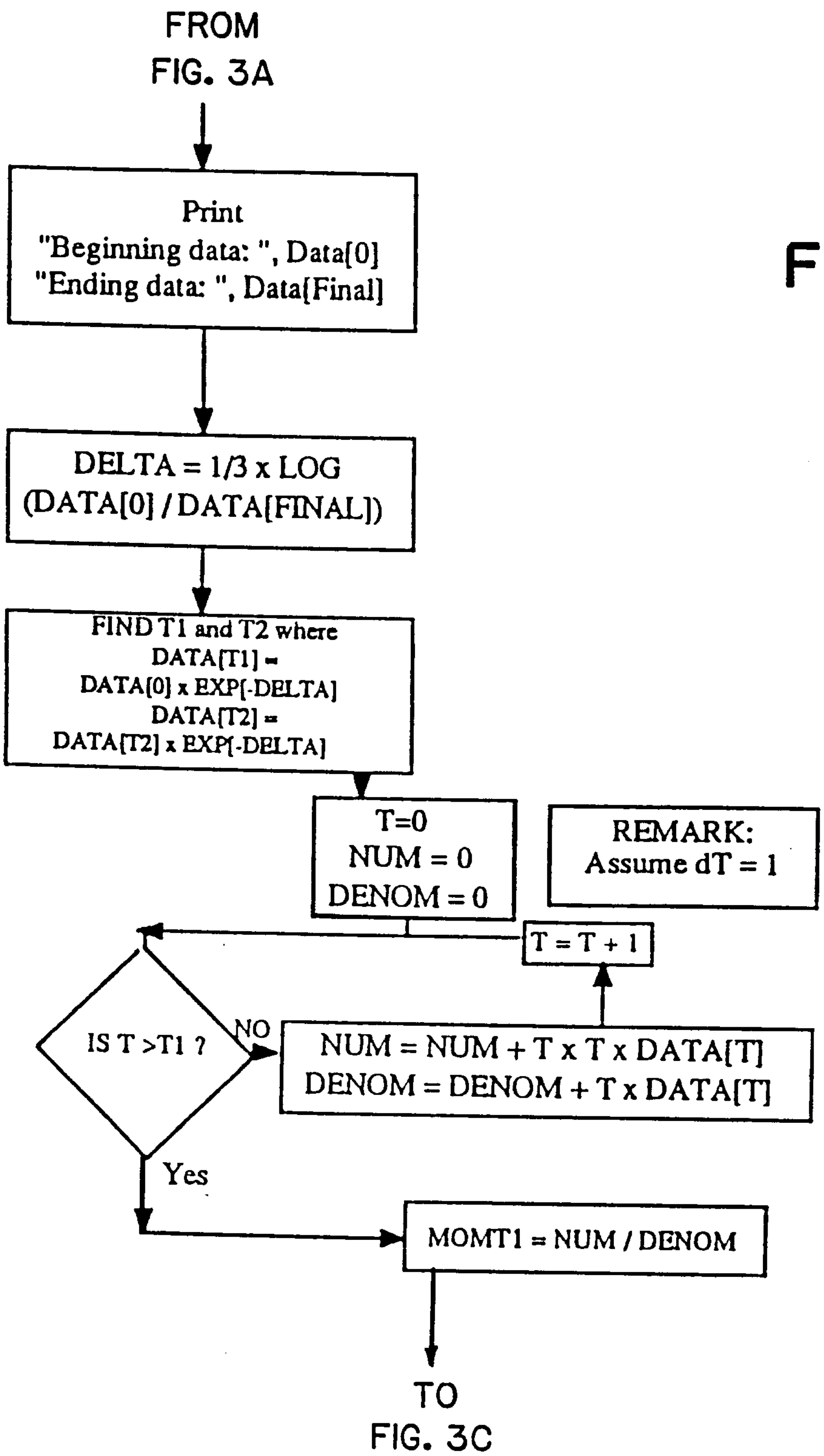
FROM
FIG. 3A
Print
"Beginning data: ", Data[0]
"Ending data: ", Data[Final]
DELTA = 1/3 x LOG
(DATA[0] / DATA[FINAL])
FIND T1 and T2 where
DATA[T1] =
DATA[0] x EXP[-DELTA]
DATA[T2] =
DATA[T2] x EXP[-DELTA]
T=0
NUM = 0
DENOM = 0
REMARK:
Assume dT = 1
T = T + 1
IS T >T1 ?
NO
NUM = NUM + T x T x DATA[T]
DENOM = DENOM + T x DATA[T]
Yes
MOMT1 = NUM / DENOM
TO
FIG. 3C

FIG. 3B

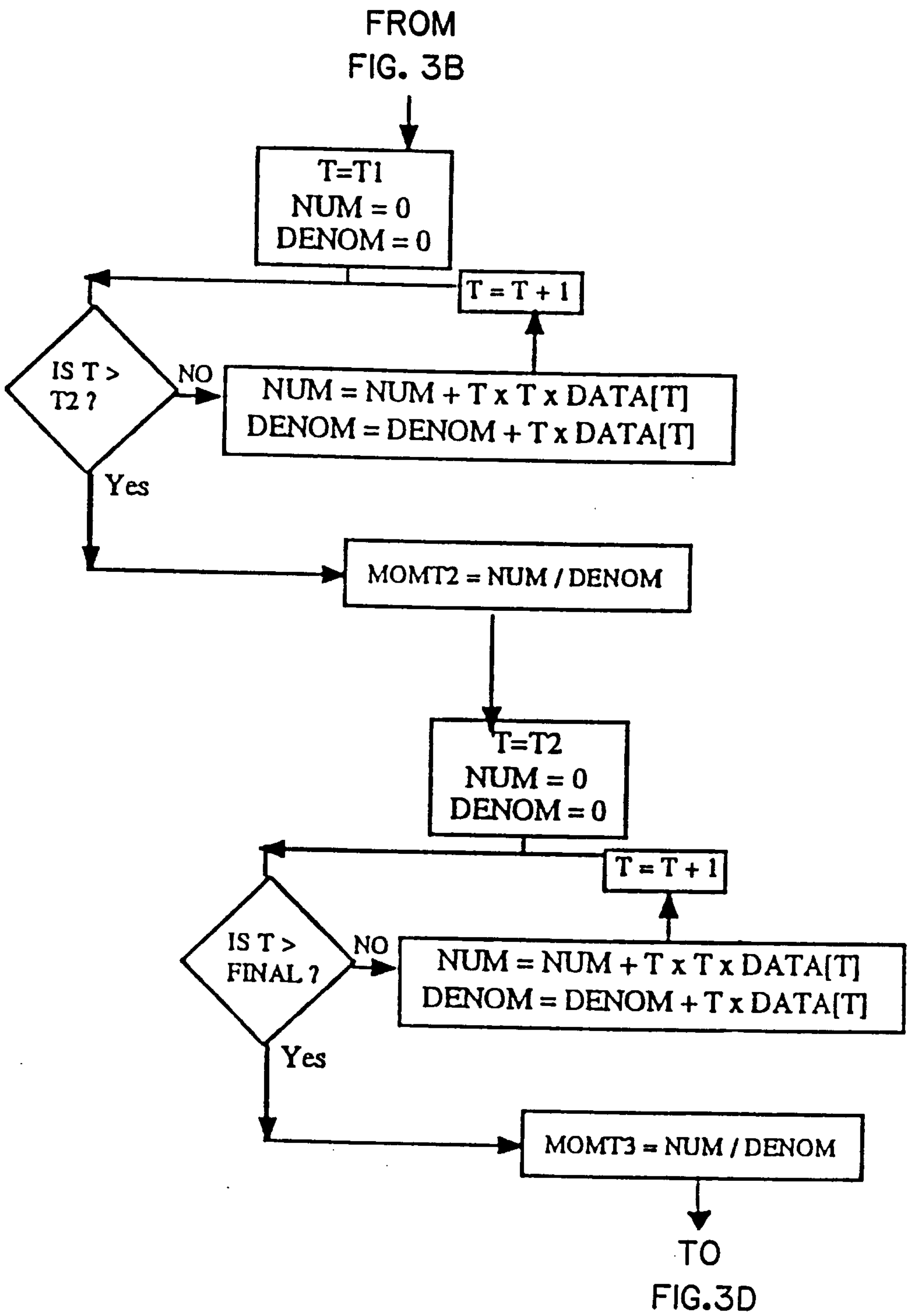
FROM
FIG. 3B
T=T1
NUM = 0
DENOM = 0
T = T + 1
IS T > T2 ?
NO
NUM = NUM + T x T x DATA[T]
DENOM = DENOM + T x DATA[T]
Yes
MOMT2 = NUM / DENOM
T=T2
NUM = 0
DENOM = 0
T = T + 1
IS T > FINAL ?
NO
NUM = NUM + T x T x DATA[T]
DENOM = DENOM + T x DATA[T]
Yes
MOMT3 = NUM / DENOM
TO
FIG.3D

FIG. 3C

FIG. 3D

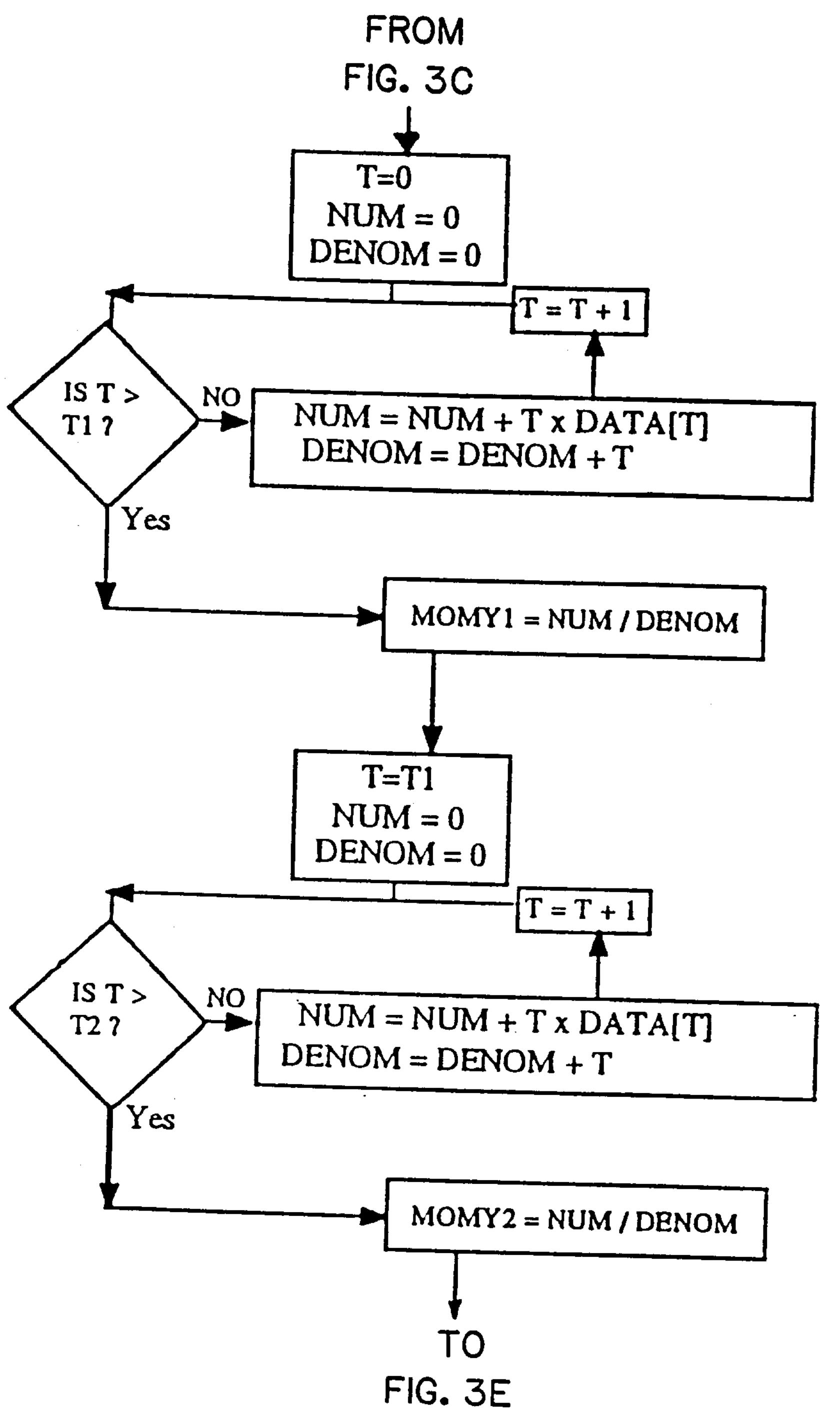
FROM
FIG. 3C
T=0
NUM = 0
DENOM = 0
T = T + 1
IS T > T1 ?
NO
NUM = NUM + T x DATA[T]
DENOM = DENOM + T
Yes
MOMY1 = NUM / DENOM
T=T1
NUM = 0
DENOM = 0
T = T + 1
IS T > T2 ?
NO
NUM = NUM + T x DATA[T]
DENOM = DENOM + T
Yes
MOMY2 = NUM / DENOM
TO
FIG. 3E

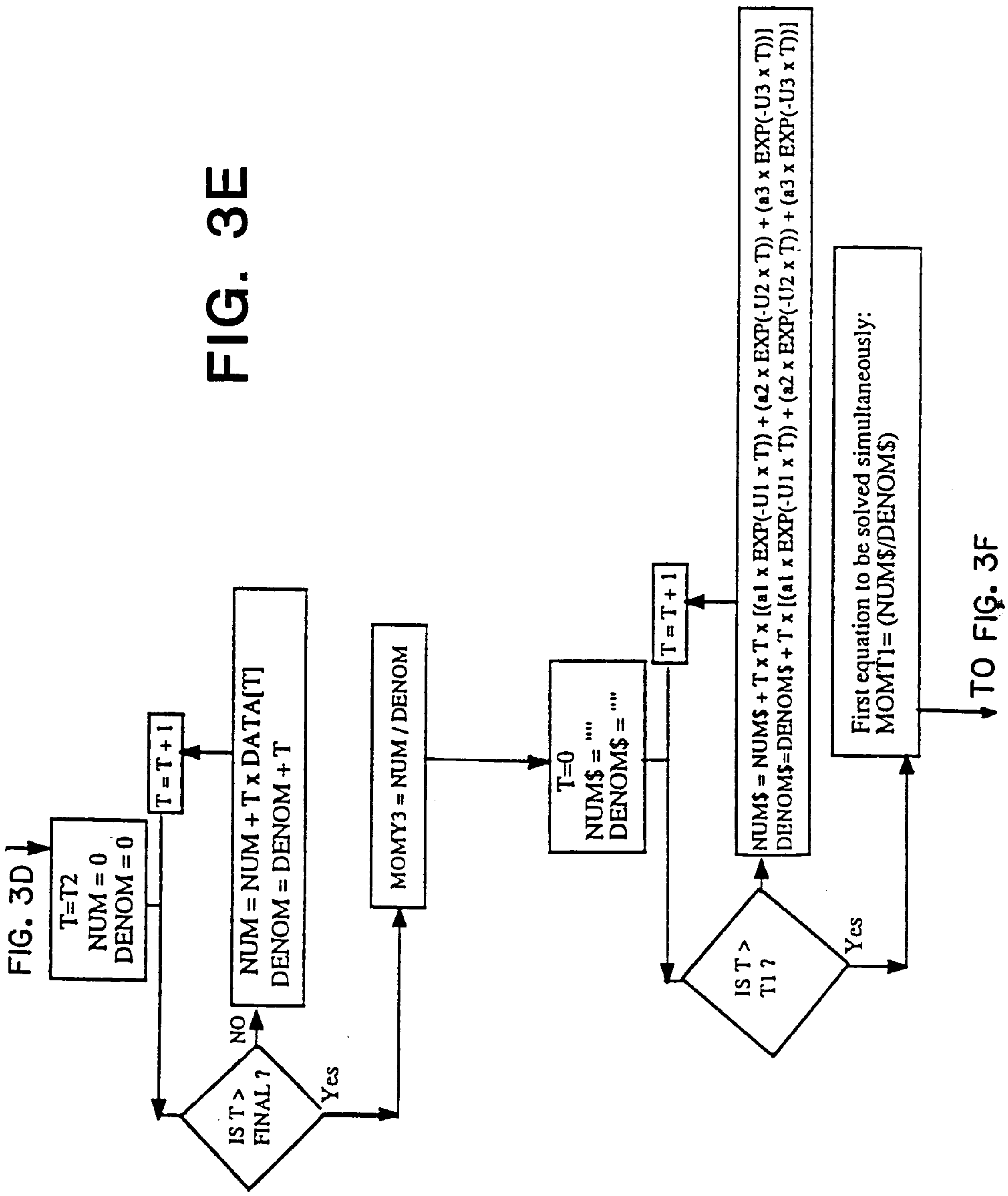
FIG. 3D
T=T2
NUM = 0
DENOM = 0
T = T + 1
NUM = NUM + T x DATA[T]
DENOM = DENOM + T
IS T > FINAL ?
NO
Yes
MOMY3 = NUM / DENOM
T=0
NUM$ = ""
DENOM$ = ""
T = T + 1
NUM$ = NUM$ + T x T x [(a1 x EXP(-U1 x T)) + (a2 x EXP(-U2 x T)) + (a3 x EXP(-U3 x T))]
DENOM$=DENOM$ + T x [(a1 x EXP(-U1 x T)) + (a2 x EXP(-U2 x T)) + (a3 x EXP(-U3 x T))]
IS T > T1 ?
Yes
First equation to be solved simultaneously:
MOMT1= (NUM$/DENOM$)
TO FIG. 3F

FIG. 3E

FROM FIG. 3E

FIG. 3F

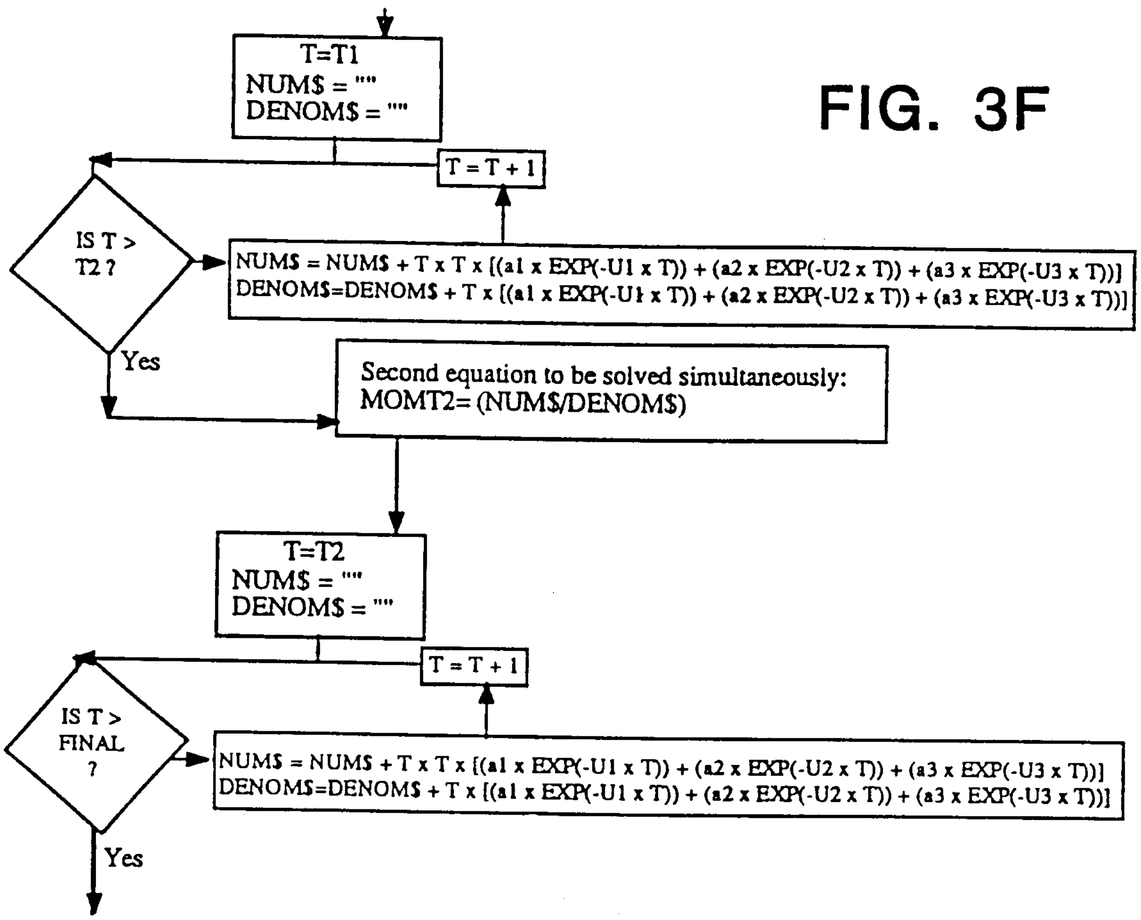


TO FIG. 3G

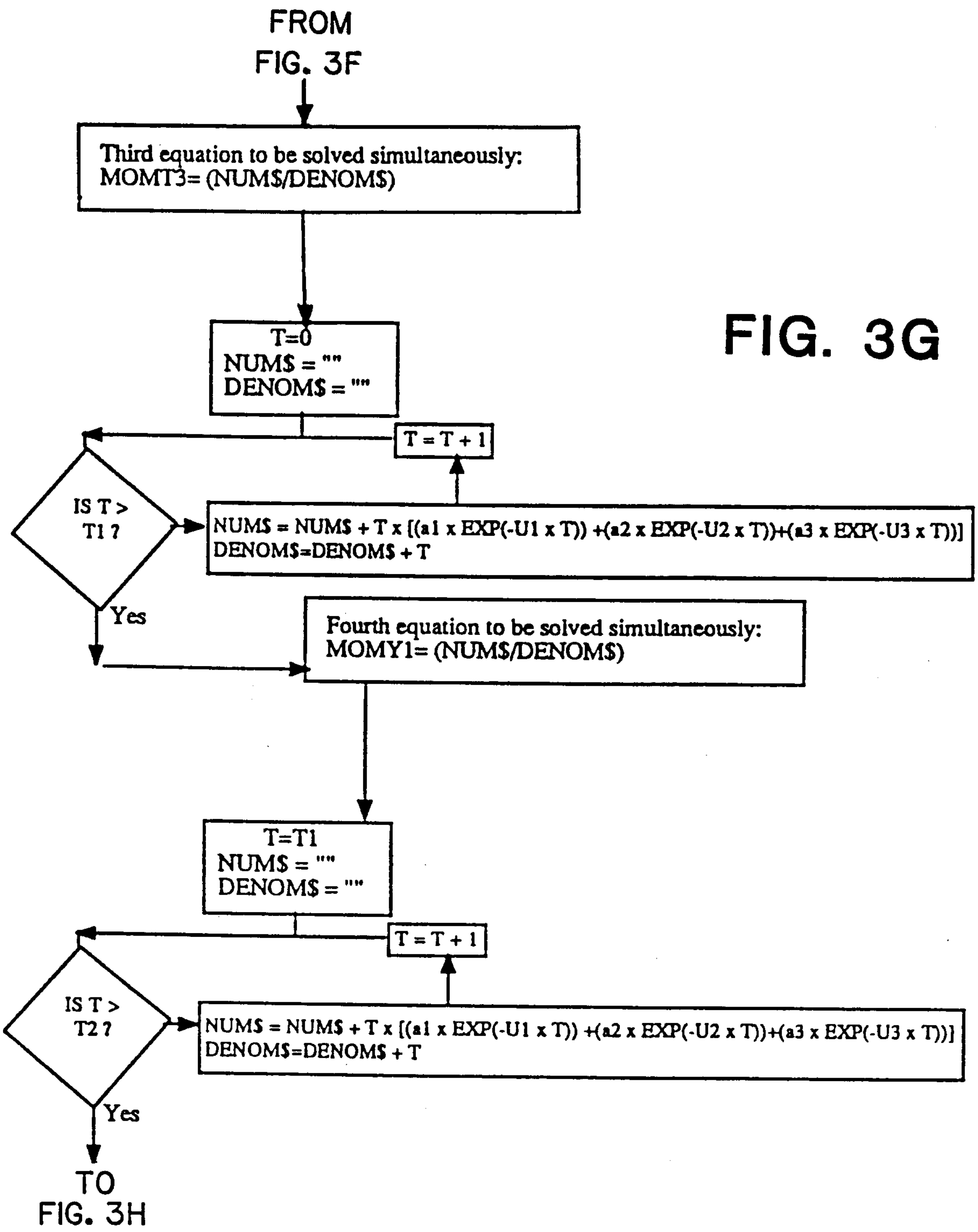
FROM
FIG. 3F
Third equation to be solved simultaneously:
MOMT3= (NUM$/DENOM$)
T=0
NUM$ = ""
DENOM$ = ""
T = T + 1
IS T >
T1 ?
NUM$ = NUM$ + T x [(a1 x EXP(-U1 x T)) +(a2 x EXP(-U2 x T))+(a3 x EXP(-U3 x T))]
DENOM$=DENOM$ + T
Yes
Fourth equation to be solved simultaneously:
MOMY1= (NUM$/DENOM$)
T=T1
NUM$ = ""
DENOM$ = ""
T = T + 1
IS T >
T2 ?
NUM$ = NUM$ + T x [(a1 x EXP(-U1 x T)) +(a2 x EXP(-U2 x T))+(a3 x EXP(-U3 x T))]
DENOM$=DENOM$ + T
Yes
TO
FIG. 3H

FIG. 3G

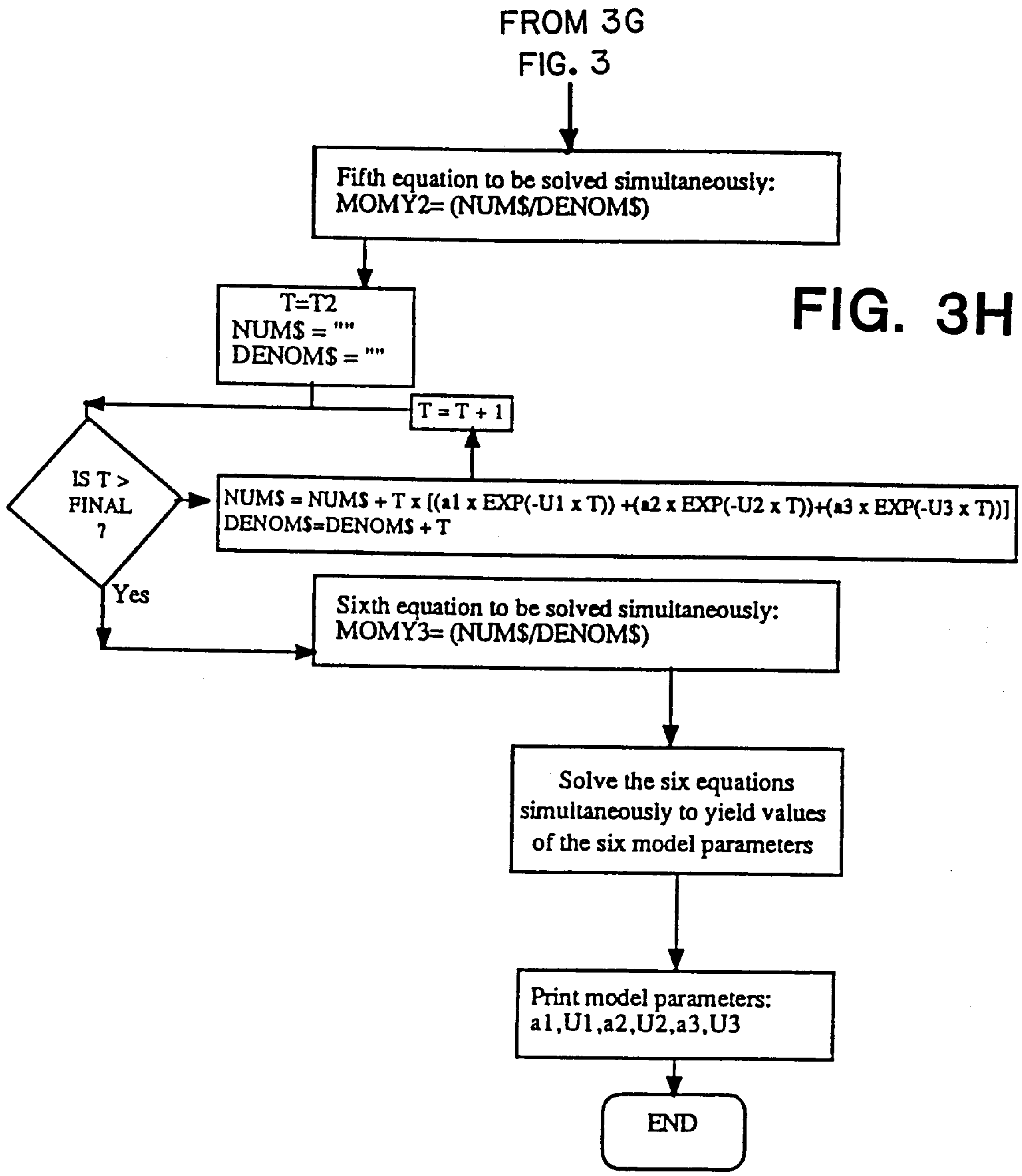
FROM 3G
FIG. 3
Fifth equation to be solved simultaneously:
MOMY2= (NUM$/DENOM$)
T=T2
NUM$ = ""
DENOM$ = ""
T = T + 1
IS T >
FINAL
?
NUM$ = NUM$ + T x [(a1 x EXP(-U1 x T)) +(a2 x EXP(-U2 x T))+(a3 x EXP(-U3 x T))]
DENOM$=DENOM$ + T
Yes
Sixth equation to be solved simultaneously:
MOMY3= (NUM$/DENOM$)
Solve the six equations
simultaneously to yield values
of the six model parameters
Print model parameters:
a1,U1,a2,U2,a3,U3
END

FIG. 3H